# EUROPEAN PATENT APPLICATION

(11) **EP 1 168 337 A2**
(43) Date of publication of application: **02.01.2002**
(21) Application number: 01122125.6
(22) Date of filing: 20.01.1999
(51) Int. Cl.: G11B 23/087

(54) **Magnetic tape cassette**

(30) Priority: 20.01.1998 JP 910498
(62) Divisional of application: 99901123.2
(71) Applicant: FUJI PHOTO FILM CO., LTD., Kanagawa-ken, 250-0193 (JP)
(72) Inventor: Shiga, Hideaki, Odawara-shi, Kanagawa, 250-0001 (JP); Nishiyama, Shigeru, Odawara-shi, Kanagawa, 250-0001 (JP); Yamamoto, Hidetoshi, Odawara-shi, Kanagawa, 250-0001 (JP)
(74) Representative: Grünecker, Kinkeldey, Stockmair & Schwanhäusser Anwaltssozietät

(57) **Abstract**

A magnetic tape cassette comprising a casing body composed of an upper half and a lower half for receiving a pair of take-up hubs around which a magnetic tape is wound, for apply of a tension through a predetermined path to the magnetic tape between said pair of take-up hubs and for mating with each other so that only the forward magnetic tape is exposed to the outside, said upper half has a planar upper half body and side walls suspended from said upper half body in three directions except for the front portion of said cassette case, a thickness of the side wall on the rear portion of said cassette case out of these side walls is greater than a thickness of the rest of side walls of the side portion of said cassette case, and a recess portion for preventing an interference with the magnetic tape wound around said take-up hubs is formed in the side wall of said rear portion and a depth of said recess portion towards said upper half body from the release end side of the side wall of this rear portion is smaller than a height of the side wall of said rear portion.

## Description

The present invention relates to a magnetic tape cassette according to the preamble portion of claim 1.

A small-size and light-weight. magnetic tape cassette is conventionally known which may record digital signals at a high density. For instance, a DAT is known as a magnetic tape cassette for converting audio signals, which are analog signals, into, for example, PCM signals for recording and/or reproducing the audio signals. Also, a DDS is known as a compact magnetic tape cassette for recording data for computers.

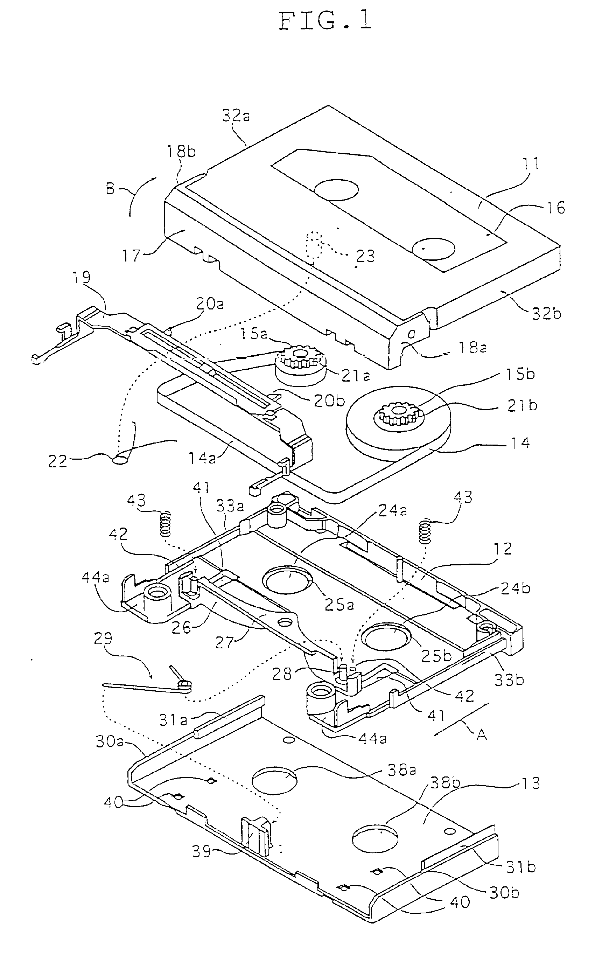

As shown in FIG. 1, this magnetic tape cassette is basically composed of primary structural elements such as an upper half 11, a lower half 12 coupled with the upper half 11 in a lid alignment manner to constitute a casing body, a slider 13 attached slidably in a direction of an arrow A along a bottom surface and side walls of the lower half 12, and a magnetic tape 14 received within the casing body. The magnetic tape 14 is tensioned through a predetermined path between a supply side hub 15a and a take-up side hub 15b. Only a magnetic tape 14a at a front portion, i.e., a projected portion corresponding to a recording head position of a recording/reproducing apparatus is exposed to the outside when the magnetic taoe cassette is used.

A visually observation window 16 is formed in the upper half 11 in the magnetic tape cassette for observing from the outside the magnetic tape 14 received in the casing body.

Also, a front lid 17 is mounted at a front end of the upper half 11 in order to prevent dusts or foreign matters from being entering or to protect the magnetic tape from being contacted by user's fingers when the magnetic tape is handled. The front lid 17 is rotatably mounted on pivot shaft receiving portions, provided at the front side end of the upper half, by the pivot shafts projected inside of right and left side end portions 18a and 18b, respectively. When the magnetic tape is not used, this front lid 17 covers a front side surface of the lower half 12 to protect the magnetic tape from the dusts, foreign matters or the like. When the magnetic tape is used, the above-described slider 13 is moved slidably backward along the direction of the arrow A. At the same time, the right and left side end portions 18a and 18b are rotated in a direction of an arrow B around the pivots of the above-described pivot shafts to release the front surface of the casing body for applying the magnetic tape to the recording/reproducing apparatus.

Also, a brake member 19 is provided in the upper half 11 in order to prevent the magnetic tape 14, wound from the supply side hub 15a to the take-up side hub 15b, from being loosened when the magnetic tape cassette is not used. The brake member 19 causes brake pieces 20a and 20b to engage with gears 21a and 21b provided at upper portions of the supply side hub 15a and the take-up side hub 15b, respectively, whereby the rotation of the supply side hub 15a and the take-up side hub 15b is prohibited to thereby prevent the loosening of the magnetic tape 14. The brake member 19 is biased by a brake spring 22 to a position where the brake pieces 20a and 20b engage with the gears 21a and 21b when the cassette is not used. The brake spring 22 is retained at a protrusion 23 formed on the upper half 11.

In the lower half 12, a drive shaft insertion hole 24a for the supply side hub and a drive shaft insertion hole 24b for the return winding side hub are provided in order to insert a tape drive member (not shown) of the recording/reproducing apparatus when the recording and/or reproducing is effected on the magnetic tape. In the lower half 12, grooves 25a and 25b for retaining the lower portions of the supply side hub 15a and the return winding hub 15b for winding the magnetic tape are formed along the circumferential portions of the drive shaft insertion hole 24a for the supply side hub and the drive shaft insertion hole 24b for the return winding side hub.

Also, in the lower half 12, a wall-like member 26 curved in the form of a V-shape is provided along the magnetic tape 14 wound around the take-up hub 15b. A triangular plate member 27 is mounted on its upper portion. This triangular plate member 27 has functions to enhance rigidity of the above-described wall-like member 26 and the casing body, to enhance sealability within the case in corporation with ribs (not shown) of the upper half 11 to enhance the dust preventing effect, and further, to support the above-described brake spring 22 from below to prevent it from being dismounted, for example.

Furthermore, a protrusion 28 is formed on the lower half 12, and a torsion coil spring 29 that is the biasing means for biasing the slider 13 forwardly is retained at the protrusion.

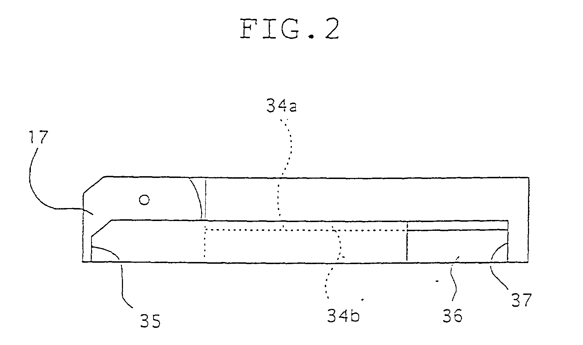

The slider 13 is slidably attached along the bottom surface and the side walls of the lower half 12. This slider 13 has rectangular engagement sliding portions 31a and 31b at rear end inner edges of right and left side walls 30a and 30b. The engagement sliding portions 31a and 31b are slidably inserted into sliding grooves 34a and 34b, formed between a left side wall 32a of the upper half 11 and a left side wall 33a of the lower half 12, and between a right side wall 32b of the upper half 11 and a right side wall 33b of the lower half 12, respectively, as indicated by dotted lines in FIG. 2 when the upper half 11 and the lower half 12 are coupled together to form the casing body.

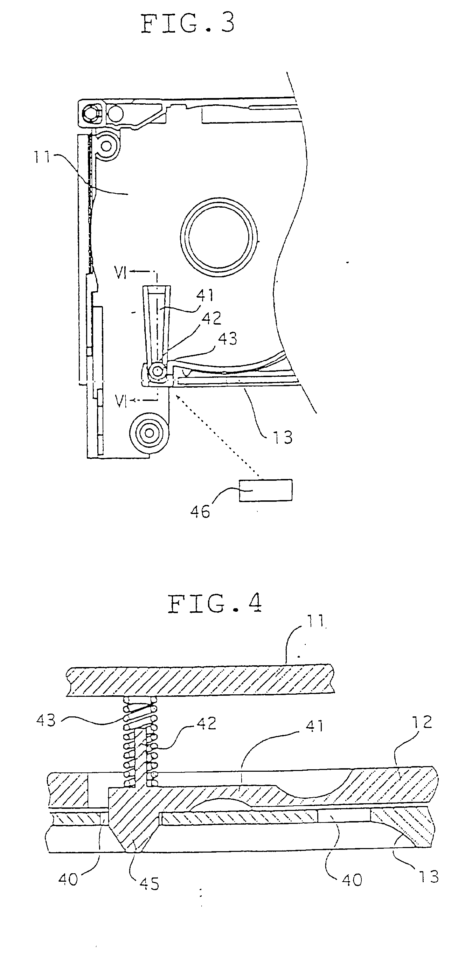

As shown in FIG. 4, when the magnetic tape is not'used, this slider 33 is engaged and retained at a position where its front end portion 35 is in abutment with the inner end of the front lid 17, by an engagement locking mechanism provided on the bottom surface of the lower half 12 to close the drive shaft insertion hole 24a for the supply side hub and the drive shaft insertion hole 24b for the return winding side hub of the lower half 12 to thereby prevent the dusts or foreign matters from entering from the lower side of the drive shaft insertion holes 24a and 24b. Also, when the magnetic tape is used, the engagement locking mechanism is released by the magnetic tape recording/reproducing apparatus, and at the same time, the slider 33 is moved slidably backwardly to the position where its rear end portion 36 is in abutment with the rear end 37 of the lower half. At this time, guide holes 38a and 38b formed in the bottom surface of the slider 13 are aligned with the drive shaft insertion hole 24a for the supply side hub of the above-described lower half 12 and the drive shaft insertion hole 24b for the return winding side hub to thereby open the drive shaft insertion holes 24a and 24b.

Also, a rib 39 is formed on the slider 13 in an upright state for receiving the biasing force of the torsion coil spring 29 or retaining the above-described coil spring 29.

Furthermore, two retainer holes 40 are formed each on the right and left sides of the engagement locking mechanism of the slider 13, and free end head portions of resilient locking pieces 41 provided in a cantilever fashion on the lower half 11 are engaged with the retainer holes 40 so that the slider 13 may be retained at the two positions to be described later. Bosses 42 are formed in an upright state at the free end head portions of the resilient locking pieces 41 to thereby bias the resilient locking pieces 41 toward'the above-described retainer holes 40. Compression coiled springs (compression springs, slider locking springs) 43 are mounted for positively locking the slider 13 in place.

In this magnetic tape cassette, when the upper half 11 and the lower half 12 are coupled together to form the casing body, the sliding grooves 34a and 34b form an opening portion between the upper and lower halves. A mechanical strength against the pressure in the vertical direction is weak structurally in the vicinity of the sliding grooves, i.e., both sides of the casing body. Then, its rigidity is low. On the other hand, the inside vicinity of the sliding grooves is close to the respective mechanical parts such as a magnetic tape travelling portion, an opening/closing mechanism of the front lid 17, the engagement locking mechanism of the slider 13 and the like, which are important in effecting the functions of the magnetic tape cassette. Also, in order to stably operate these mechanical parts, the vicinity of the sliding grooves has to have high rigidity. In particular, since the vicinity of tape drawing portions 44a and 44b are the important portions through which the magnetic tape 14 travels, in order to ensure the stable travelling mechanism, the vicinity has to have sufficient rigidity. For this reason, in the conventional magnetic tape cassette, it is necessary to use the material having high rigidity even if it is expensive or to take a countermeasure by using the material which is high grade in rigidity even if the material is in the same class. This causes the cost to be increased.

FIG. 3 is a plan view showing a left half of the lower half 11 assembled with the slider 13. FIG. 4 is a cross-sectional view thereof taken along the line VI-VI. However, for the sake of explanation, the upper half 11 which has been omitted from FIG. 3 is shown in FIG. 4. In FIG. 3, the slider 13 is located at a position where it releases the guide insertion portions or the like. As shown in FIG. 4, the compression coil springs 43 are mounted on the bosses 42 formed in the upright state on the free end head portions 45 of the resilient locking pieces 41. The compression coil springs 43 are compressed from above by the upper half 11 to thereby bias the free end head portions 45 to be positively inserted into the retainer holes 40 of the slider 13.

When the casing body is to be assembled, the above-described compression coil springs 43 are dropped by an automatic machine to the above-described bosses 42 from above for assembly. It is however necessary to detect whether or not the compression coil springs 43 are exactly mounted around the bosses 42. Since the compression coil springs 43 are made of metal, the detection thereof is performed by irradiating the light to the compression coil springs 43 and sensing a reflective light thereof with an optical sensor 46 as shown in FIG. 3.

On the other hand, the slider 13 cannot be biased uniformly by the torsion coil spring 29, and the sliding movement of the slider 13 is unstable. Accordingly, it is possible to use a V-shaped leaf spring instead of the torsion coil spring 29.

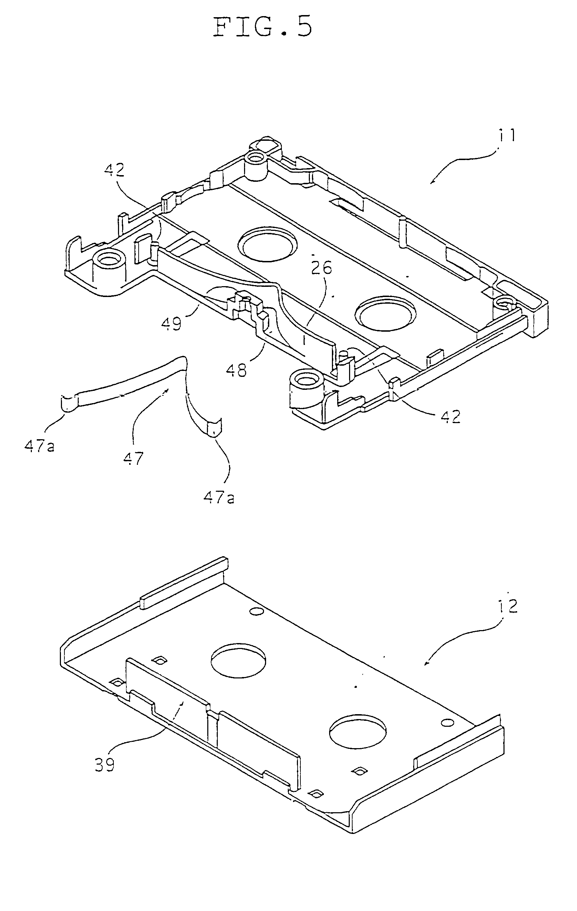

An example of the lower half 12 and the slider 13 using the V-shaped leaf spring 47 is shown in FIG. 5. In order to facilitate the assembly of the leaf spring 47, it is possible to dispense with the triangular plate member 27 shown in FIG. 1, to form a rib 49 in the upright manner on the bottom surface 48 of the lower half 12 and to assemble the leaf spring 47 here from above. Thus, in this example, since the leaf spring 47 is used, it is necessary to provide the above-described wall member 26 to extend the vicinity of the bosses 42 around which the above-described compression coil springs 29 are mounted. Also, the rib 39 of the slider 13 has to be formed to be wall-like for receiving the biasing force of the leaf spring 47 or at least the portion that is in abutment with both end portions 47a of the leaf spring 47 and in sliding contact therewith has to have a width corresponding to the leaf spring 47.

However, there is such a problem that the wall-like rib 39 of the slider 13 or the above-described wall-like member 26 interrupts the optical path when the above-described compression coil spring 43 is detected by the optical sensor 46 depending upon its shape, resulting in obstruction in detection.

Also, with respect to the above-described wall-like member 26, only by dispensing with the above-described triangular member 27 and extending the wall-like member, there is a problem that its rigidity becomes low.

By the way, a dimension of a contour of a casing body of the magnetic tape cassette, a position of a take-up hub which engages with a reel shaft of a recording (recording) and reproducing (readout), a shape and a size of an engagement portion, a position of the magnetic tape which contacts a recording (recording) head when the magnetic tape cassette is used for recording (recording) and reproducing (readout), and the like are determined in accordance with standards. In order to make it possible to perform the recording for a long period of time within the shape and dimension determined in accordance the standards, a longer magnetic tape has to be wound around the take-up hub and received in the case. Accordingly, the upper half 11 and the lower half 12 constituting the casing body is made of plastic such as ABS resin or the like which has a very small thickness.

In particular, the upper half 11 is in the form of a box as a whole but the front portion on which the front lid 17 is mounted is in the form of a projection corresponding to the recording head position of the recording/reproducing apparatus when the recording or the reproducing is performed. As a result, it is impossible to provide side walls to the front portion of the upper half 11. The upper half 11 is formed in an open shape. It is impossible to provide effective reinforcement walls or reinforcement ribs.

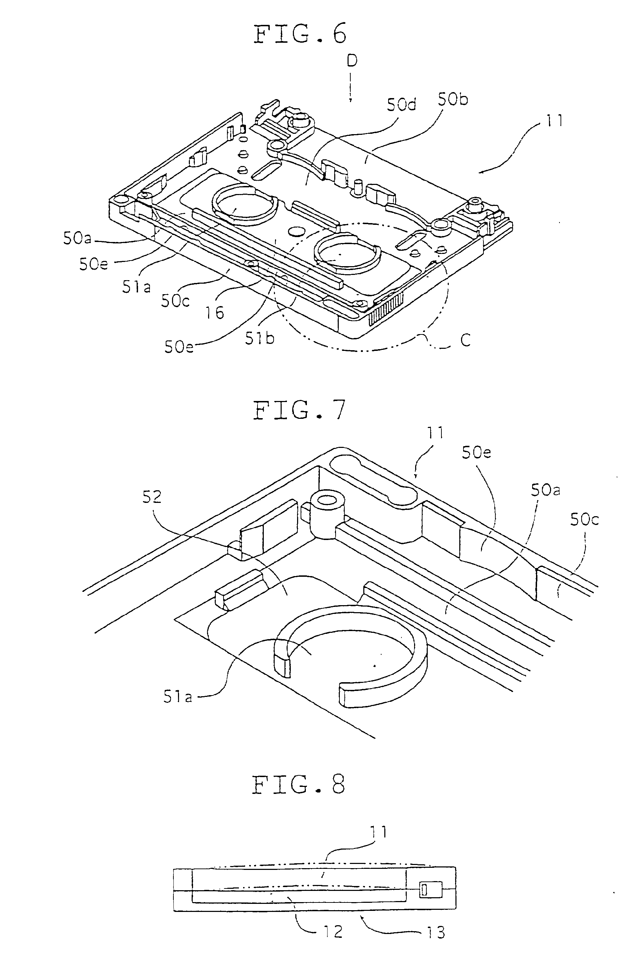

Here, FIG. 6 is a perspective view showing the inside of the upper half 11 which has been turned over. FIG. 7 is an enlarged perspective view showing only a front lower side (encircled by a phantom line C) of the upper half 11 shown in FIG. 6 as viewed from the opposite direction (in the direction of the arrow D in the front portion of the cassette case).

In these drawings, the upper half 11 is provided with side walls 50c except for the front portion 50b of the planar upper half body 50a which is the upper surface of the casing body, and with a transparent window 16 for observing from the outside of the cassette case the take-up condition of the magnetic tape (not shown) somewhat on the rear side of the central portion. Then, two bearing portions 51a and 51b for supporting roiatably the gears (not shown) of the take-up hub are provided to this window 16.

The front portion of the window 16 is a brake member mounting portion 50d for mounting a brake member for engaging with the gear of the take-up hub and preventing the rotation of the take-up hub. The more front portion of the brake member mounting portion 50d is a space for introducing the tape loading device provided on the side of the recording/reproducing apparatus when the magnetic tape' cassette is loaded into the recording/reproducing apparatus. The space becomes the front portion 50b in which the protrusion portion of the magnetic tape is provided corresponding to the recording head position of the recording/reproducing apparatus.

A recess 50e is provided in the side wall 50c on the rear side of the upper half 11 so that the magnetic tape wound around the take-up hub does not interfere with the side wall 50c when all the magnetic tape wound around the take-up hub on one side comes to have a maximum diameter. The rear side wall 50c is locally thinned at the position of the recess 50e.

However, the mechanical strength and rigidity of the casing body of the magnetic tape cassette using the above-described upper half are almost satisfactory. If the magnetic tape cassette is exposed in a high temperature chamber, particularly a passenger room of an automotive vehicle in summer when the temperature reaches 60 to 80°C, the upper half is warped so that the cassette case is deformed. In the case where the cassette is extremely deformed, it is impossible to use the cassette.

It is known that the upper half 11 is extremely deformed in the longitudinal direction as shown in FIG. 8 which shows a rear side view and the deformation of the lower half 12 and the slider 13 of the casing body is relatively small.

The reason for this is that the bottom surfaces of the lower half 12 and the slider 13 are substantially flat and there is almost no change in thickness. Also, in the lower half 12, the side walls or the like which are effectively used as reinforcement ribs are formed along the longitudinal direction both on the front side and rear side of the lower half 12 thereby being less in deformation.

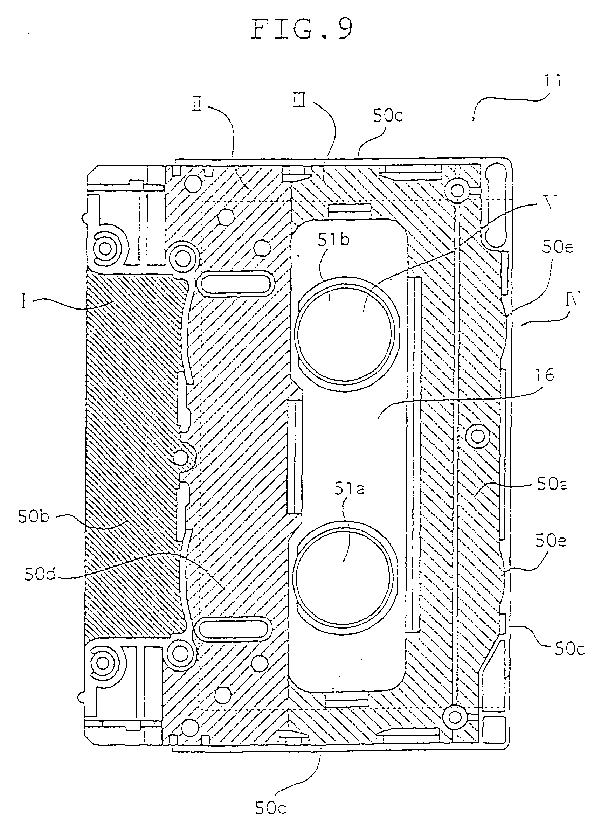

In contrast, the cause of the easy deformation of the upper half 11 will now be described with reference to FIG. 9.

FIG. 9 is a plan view of the upper half 11 as viewed from the inside.

Since a dimension of a region I (front portion 50b) for keeping the introduction space for the tape loading apparatus is standardized, its thickness is limited to cause the deformation.

Since the thickness of a region II (brake member mounting portion 50d) is determined in view of keeping the space for receiving and slidingly moving the above-described brake member, it is inevitable to decrease the thickness more than inherently desired, to cause the deformation.

With respect to a region III, there is no problem for balancing the dimension with other members as described above. However, since the region III is molded integrally with the above-described region II, in view of the stabilized molding, it is impossible to provide a difference in thickness relative to the thickness of the above-described region II.

Also, the upper surface of the upper half 50 corresponding to the regions II and III is a recessed portion stepped down by about 0.15 mm as the region to which a label for indicating the recorded content or the like is attached. In view of this, the thickness of the above-described regions II and III is decreased to cause the deformation.

The thickness of a region IV of the upper half rear side wall 50c is very small in order to prevent the interference with the magnetic tape wound around the take-up hub.

Accordingly, the distortion is liable to occur in molding. Under the above-described high temperature circumstances or the like, since the distortion is returned back so that the distortion is most liable to occur in the upper half 11.

A region V is the window 16 for observing the magnetic tape wound around the take-up hub. This is made of different material. The thickness is decreased for keeping the above-described receiving space for the above-described take-up hub to cause the deformation.

As described above, the upper half 11 intrinsically includes the components to cause the deformation. The most serious regions are the region IV (the deformation of the half rear side wall) and the regions II and III having the label attachment portions.

Thus, within the upper half 11, there is no extra space for providing effective reinforcement walls or reinforcement ribs for preventing a thermal deformation at all. However, it is necessary to prevent the thermal deformation of the upper half 11, which is an important point to be solved.

The present invention has been made in view of these problems.

It is an objective of the present invention to provide a magnetic tape cassette as indicated above in which the deformation is suppressed at least within an allowable limit without deformation of the cassette case due to the high temperature even if the magnetic tape cassette is exposed in a chamber kept at a high temperature like a passenger room of an automotive vehicle in summer.

This objective is solved in an inventive manner for a magnetic tape cassette having the features of claim 1.

Accordingly, there is provided a
magnetic tape cassette comprising a casing body composed of an upper half and a lower half for receiving a pair of take-up hubs around which a magnetic tape is wound, for applying a tension through a predetermined path to the magnetic tape between said pair of take-up hubs and for coupling in a lid mating manner so that only the forward magnetic tape is exposed to the outside,
wherein said upper half has a planar upper half body and side walls suspended from said upper half body in three directions except for the front portion of said casing body,
wherein a thickness of the side wall on the rear portion of said casing body out of these side walls is greater than a thickness of the rest of side walls of said casing body, and
wherein a recess portion for preventing an interference with the magnetic tape wound around said take-up hubs is formed in the side wall of said rear portion and a depth of said recess portion toward the side of said upper half body from the release end side of the side wall of this rear portion is smaller than a height of the side wall of said rear portion.

According to a preferred embodiment, there is provided a magnetic tape cassette having an upper half, a lower half mating with said upper half to constitute a casing body and a slider attached along a bottom surface and side surfaces of the lower half,
wherein said slider has at both side ends engagement sliding portions engaged slidingly with sliding grooves formed along a back-and-force direction of the casing body between right and left side walls of the upper half and right and left side walls of the lower half, and
wherein lower abutment portions projected from the lower half and upper abutment portion projected from the upper half corresponding to said lower abutment portions and kept in contact with said lower abutment portions are provided in the vicinity of and inside of said engagement sliding portions.

For a magnetic cassette tape, according to this preferred embodiment, the vicinity of the sliding grooves of the slider which have lower rigidity in structure is reinforced, with the result that the sufficiently high rigidity that may stably operate respective mechanisms such as a cape travelling mechanism is attained in low cost.

According to a further preferred embodiment, there is provided a magnetic tape cassette having an upper half and a lower half for receiving a pair of take-up hubs around which a magnetic tape is wound and for forming a casing body coupled in a lid mating manner and a slider attached along a bottom surface and side surfaces of the lower half,
wherein said slider is mounted on an outer lower surface of said lower half slidably along the bottom surface of said lower half so that a guide insertion portion on a front side of the casing body and reel shaft insertion holes of the bottom surface of said lower half-can be opened and closed, and is biased to a position where said guide insertion portion and said reel shaft insertion portion are closed by a V-shaped leaf spring; comprising,
resilient locking pieces formed in the bottom surface of the lower half in a cantilever manner along the bottom surface of said lower half with their free end head portions being inserted into the engagement holes of said slider for retaining said slider;
compression springs provided between the free end head portions of said resilient locking pieces and the inner wall of said upper half for biasing the head portions toward the side of engagement holes of the slider;
a wall-like member provided vertically to the bottom surface on the front side of said lower half and in the form of a V-shape along the magnetic tape wound around said take-up hub by make continuous two divided sleeve-shaped ribs with its both end portions extending up to the vicinity of the provision position of said compression springs,
wherein both end portions of said wall-like member are bent in an L-shape and at the same time its end portions are cut away so that said compression springs are exposed.

For a magnetic tape cassette, according to this further preferred embodiment, detection of the above-described compression coil springs is positively performed by the light when a V-shaped leaf spring is used as a slider biasing means, and the rigidity of the wall-like member of the above-described lower half is enhanced.

Further preferred embodiments are laid down in further dependent claims.

In the following, the present invention is explained in greater detail with respect to several embodiments thereof in conjunction with the accompanying drawings, wherein:
FIG. 1 is a perspective view showing primary structural elements of the conventional magnetic cape cassette.
FIG. 2 is a side view of the conventional magnetic tape cassette.
FIG. 3 is a plan view showing a left half of the lower half assembled with the slider.
FIG. 4 is a cross-sectional view thereof taken along the line VI-VI of FIG. 3.
FIG. 5 is a perspective view illustrate a problem in the lower half and the slider using the V-shaped leaf spring.
FIG. 6 is a perspective view showing the inside of the upper half which has been turned over.
FIG. 7 is an enlarged perspective view showing only a front lower side (encircled by a phantom line C) of the upper half shown in FIG. 6 as viewed from the opposite direction (in the direction of the arrow D in the front portion of the cassette case).
FIG. 8 is a illustrative view showing a rear side view and the deformation of the lower half and the slider.
FIG. 9 is a plan view of the upper half 11 as viewed from the inside.
FIG. 10 is a perspective view showing an inside structure of an upper half which has been turned over, in the cassette according to the embodiment
FIG. 11 is a perspective view showing a lower hall and a slider attached into the lower half.
FIG. 12 and FIG. 14 is a plan view showing the lower half.
FIG. 13 is an enlarged view showing a portion indicated by reference character E in FIG. 12.
FIG. 15 is a perspective view showing the inside of the upper half which has been turned over.
FIG. 16 is an enlarged perspective view showing the forward lower side (a portion encircled by imaginary line F) of the upper half 61 shown in FIG. 15, as viewed in the opposite direction (in the direction of the forward arrow G of the cassette).
FIG. 17 is a perspective view showing an outer appearance of the upper half 61.
FIG. 18a is a plan view showing the upper half 61.
FIG. 18b is a cross-sectional view taken along the line VII-VII of FIG. 18a.

A magnetic tape cassette according to preferred embodiments will now be described in detail.

The cassette is composed of primary structural elements, i.e., an upper half, a lower half mating with the upper half to constitute a casing body, a slider attached to the lower half and a magnetic tape received in the casing body. The slider has on a rear end of both side walls and rectangular engagement sliding portions inserted into sliding grooves formed between right and left side walls of the upper half and right and left side walls of the lower half. The slider is slid back and force of the casing body by this engagement sliding portion.

A magnetic tape that is wound around a pair of take-up hubs and is applied a tension, is received in the casing body composed of the upper half and the lower half. In no use of the cassette, in order to prevent the magnetic tape from being loosened by rotation of the take-up hub, the brake member is provided in the upper half. The brake member has two brake pieces. These brake pieces engage with the gears provided for the take-up hubs to thereby prohibit the rotation of the take-up hubs. In no use of the cassette, the brake member is biased by the brake spring using the torsion coil spring so that the above-described braking pieces engage with the above-described gears.

In no use of the cassette, in order to protect the portion of the magnetic tape tensioned between the pair of take-up hubs, the front lid is provided at the front face of the upper half.

The wall-like member provided in the V-shape by connecting the two divided sleeve-shaped ribs is provided in an upright manner in the lower half. A vertical post-like rib is provided in an upright manner substantially in a center portion of the bottom surface of the lower half partitioned in a triangular shape by this wall-like member. A V-shaped leaf spring is inserted between this post-like rib and the above-described wall-like member.

Also, resilient locking pieces supported in a cantilever manner are provided on the bottom surface in the vicinity of both right and left end portions of the above-described wall-like member. Bosses are formed in an upright manner at their free end head portions. The compression coil springs may be mounted around the bosses.

Two retainer holes into which the free end head portions of the above-described resilient locking pieces are inserted, are provided on each of the right and left sides in the slider and the slider may be retained at two positions. Also, wall-like ribs are formed on the front side in an upright manner in order to receive the biasing force of the above-described leaf spring.

In accordance with the cassette according to a first embodiment, the lower abutment portions projected from the lower half are provided in the vicinity of and the inside of the sliding portions of the slider. Corresponding to the lower abutment portions, the upper abutment portions which are in contact with the lower abutment portions when the upper half and the lower half are coupled with each other, are projected to the upper half. At least one pair of the lower abutment portion and the upper abutment portion are provided corresponding to the lower half and the upper half. The lower abutment portions and the upper abutment portions may be provided at any positions which need the rigidity at the position where the travel of the magnetic tape received in the casing body, for example, at the position outside of the travel region of the magnetic tape or one pair of or a plurality of the lower abutment portions and the upper abutment portions may be provided in the vicinity of the inside of the sliding portion.

When the upper half and the lower half are coupled with each other to form the casing body, the top faces of the pair of the upper abutment portion and the lower abutment portion are in abutment with each other. The upper abutment portion and the lower abutment portion are integral with each other between the upper half and the lower half and the high rigidity structure which is superior in strength against the pressure in the vertical direction of the casing body may be formed.

In the cassette of the first embodiment, it is possible to locate the pair of lower abutment portion and upper abutment portion at any position where the rigidity thereof is need to be enhanced in the vicinity of and inside of the sliding portion if the abutment portions do not obstruct the stable travel of the magnetic tape. In particular, in view of the stability of the travel of the magnetic tape, it is preferable that the lower abutment portion and the upper abutment portion are provided in the vicinity of the tape drawing opening.

Also, the shape of the upper abutment portion and the lower abutment portion is not particularly limited. It is possible to suitably determined the shape in conformity with the location or the like.

Furthermore, the second embodiment relates to the shape of both right and left end portions of the wall-like member 12a of the above-described lower half 12. The wall-like member is curved at both ends toward the inside of the casing (on the side away from the tip ends of the leaf spring), further curved forwardly at an acute angle in order to enhance the rigidity and extends straightly forwardly with both end portions forming an L-shape.

In the cassette of the second embodiment, the optical sensor for detecting the compression coil springs is disposed at a position having an angle of 90° for the compression coil springs on a vertical bisector of a line connecting the two compression coil springs.

Accordingly, in order not to interrupt the optical path connecting the optical sensor and the compression coil springs, the cutaway is provided at the portion of the wall-like member extending straightly forwardly after the wall-like member is curved at the acute angle into the L-shape.

Since the cutaway is provided, in the case where the compression coil spring is detected by the optical sensor, if the slider is also located rearwardly, the optical path is not interrupted by the wall-like rib, and the light emitted from the optical sensor is projected to the compression coil spring so that the light reflected thereat is caught by the optical sensor. Accordingly, there is no fear that the L-shaped arrangement of the wall-like member would obstruct the detection.

Thus, in the cassette of the second embodiment, both end portions of the wall-like member are formed into the L-shape (in particular, the angle being acute), and at the same time, the cutaway portions are provided. It is therefore possible to perform the detection of the above-described compression coil springs by the light in a stable manner. Furthermore, it is possible to enhance the rigidity of the above-described wall-like member.

Incidentally, with respect to the detection of the compression coil spring, it is possible to perform the detection if the light is projected from the cutaway portion of the wall-like rib even if the slider is located at the front position without being always retracted to the rear position.

Also, in the cassette of a third embodiment, the upper half has the planar upper half body and the side walls suspending from the above-described half body in three directions, respectively, except for the front portion of the cassette casing. Out of these side walls, the thickness of the side wall on the rear side of the above-described casing body is increased more than the thickness of the rest of the side walls on the sides of the above-described casing body. Furthermore, in the cassette of the third invention, a recess portion for preventing the interference with the magnetic tape wound around the take-up hub is provided on the side wall on the rear side, and a depth of the recess portion extending from the release end side of the side wall on the rear side toward the above-described half body is smaller than a height of the side wall on the rear side. Thus, the thickness of the rear side wall is increased as much as possible and the portion which is to be thinned is suppressed to the minimum level in the range where the magnetic tape having the maximum diameter does not interfere with the side wall, thereby prevent the thermal deformation of the upper half.

Furthermore, in the cassette of the third embodiment, a label attachment surface stepped down for the label to be attached with the description of the content recorded on the magnetic tap is provided on the top surface of the upper half body. It is preferable to form the thickness increased portion with a wide area including the above-described label attachment surface on the inner surface of the above-described upper half body which becomes the back surface of the label attachment surface.

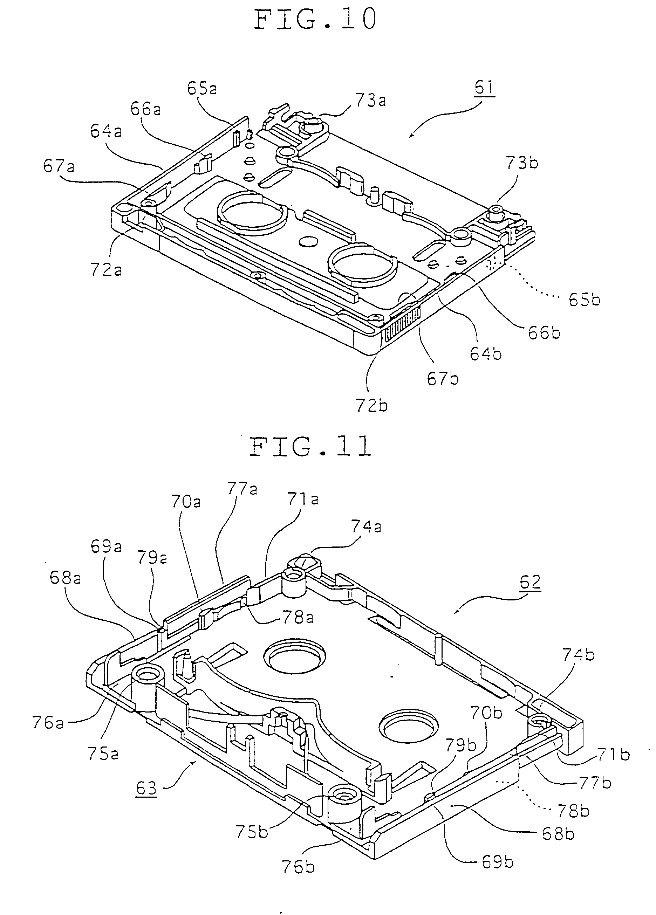

A magnetic tape cassette according to preferred embodiments will now be described in detail with reference to FIGs 10 to 18. Incidentally, in the following description, the primary structural elements relating to the first embodiment to the third embodiment are shown in the drawings but the members or parts having the same structure as that shown in foregoing FIG. 1 will not be shown.

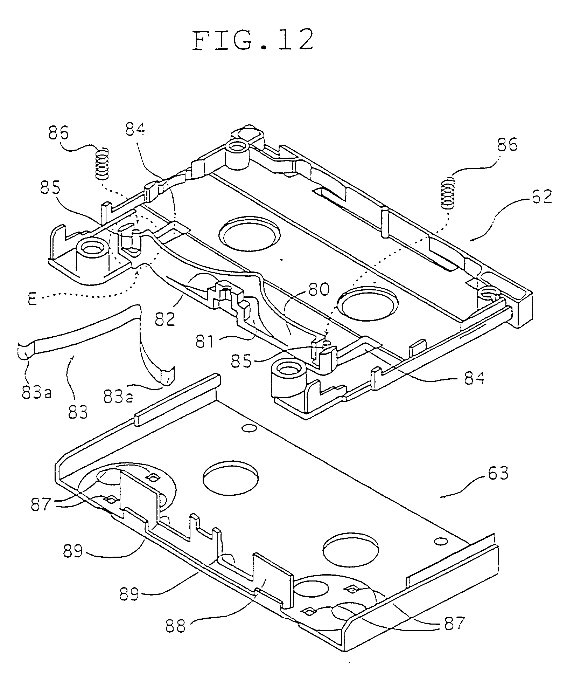

FIG. 10 is a perspective view showing an inside structure of an upper half 61 which has been turned over, in the cassette according to the embodiment of the first embodiment. FIG. 11 is a perspective view showing a lower half 62 and a slider 63 attached into the lower half 62.

The upper half 61 shown in FIG. 10 has upper abutment portions 65a, 65b, 66a, 66b and 67a and 67b on the inside of the right and left side wails 64a and 64b.

In contrast, the lower half 62 shown in FIG.11 has lower abutment portions 69a, 69b, 70a, 70b and 71a and 71b corresponding to the upper abutment portions 65a, 65b, 66a, 66b and 67a and 67b of the upper half 61 in the inside of the right and left side walls 68a and 68b.

When the upper half 61 and the lower half 62 are mated with each other to form the casing body, these upper abutment portions 65a, 65b, 66a, 66b and 67a and 67b and lower abutment portions 69a, 69b, 70a, 70b and 71a and 71b are located in the vicinity of and inside of the sliding grooves formed on both sides of the casing body, respectively, between the right and left side walls 64a and 64b of the upper half and the right and left side walls 68a and 68b of the lower half 62.

In the case where the upper half 61 shown in this FIG. 10 and the lower half 62 and the slider 63 shown in FIG. 11 are coupled with each other to form the casing body, first of all, the upper half 61 on which the necessary parts like the lid or the like are mounted is overlapped on the lower half 62 on which the necessary parts like the magnetic tape or the like, the engagement portions 72a and 72b, 73a and 73b, 74a and 74b, and 75a and 75b which are provided corresponding to the upper half 61 and the lower half 62 are mated with each other, and screws are threadedly inserted from screw holes (not shown) formed from the bottom surface side of the lower half so that the components are fastened and fixed in place. At this time, the sliding grooves along which the engagement sliding portions of the slider 63 are slidden are formed between the right and left side walls 64a and 64b of the upper half 61 and the right and left side walls 68a and 68b of the lower half 62. Also, the engagement portions 75a and 75b serves as cylindrical guides for applying a tension to the magnetic tape through a predetermined path in the assembled casing body.

Also, the slider 63 may be attached to the lower half 62 in advance or may be attached to the lower half 62 after the upper half 61 and the lower half 62 are coupled with each other.

In coupling the upper half and the lower half, the upper abutment portion 65a of the upper half 61 is contacted with the corresponding lower abutment portion 69a of the lower half 62 with top faces thereof being in abutment with each other so that the upper half 61 may form a structure having high rigidity in the vicinity and inside of the sliding grooves in cooperation with the lower half 62. Also, the upper abutment portions 65b, 66a, 66b and 67a and 67b of the upper half 61 are contacted with the lower abutment portions 69b, 70a, 70b and 71a and 71b with top faces thereof being in abutment with each other so that a high rigidity structure is formed in the vicinity and inside of the sliding grooves between the upper half 61 and the lower half 62. In particular, the lower abutment portion and the upper abutment portion are projected corresponding to the upper half and the lower half, respectively, in the vicinity of tape drawing openings 76a and 76b. When the upper half and the lower half are coupled with each other, the upper abutment portion and the lower abutment portion are in abutment with each other to form the structure having the high rigidity in the vicinity of and inside of the sliding grooves. This structure is effective in view of the stability of the tape travel.

Also, the lower abutment portions 69a and 69b of the lower half 62 and the upper abutment portions 65a and 65b of the upper half 61 are provided on the side of the drawing openings 76a or 76b of the side wall upper surfaces 78a and 78b of the lower half 62 along which the lower surfaces of the engagement sliding portions 77a and 77b of the slider 63 are slid. The lower abutment portions 69a and 69b are engaged with the front ends of the front end surfaces 79a and 79b of the engagement sliding portions 77a and 77b to limit the sliding movement of the slider 63 and to also serve as stoppers for positioning the slider 63 in a predetermined position when the slider 63 is slidingly advanced in no use of the magnetic tape cassette. This structure is useful.

Next, FIG. 12 is an exploded perspective view showing the lower half 62 and the slider 63 of the magnetic tape cassette of the second embodiment.

The lower half 62 is provided with a wall-like member 80 formed in an upright manner in a V-shape by connecting two divided sleeve-shaped rib with each other. A vertical post-like rib 82 is provided in an upright manner substantially at the center of the bottom surface portion 81 of the lower half 62 partitioned into a triangular shape by this wall-like member 80. A V-shaped leaf spring 83 is inserted between this post-like rib 82 and the above-described wall-like member 80.

Also, in the lower half 62, resilient locking pieces 84 are supported in a cantilever manner to the bottom surface in the vicinity of both right and left end portions of the wall-like member 80. Bosses 85 are provided in an upright manner at their free end head portions so that compression coil springs 86 may be mounted on the bosses 85.

Two retainer holes 87 into which the free end head portions of the above-described resilient locking members 84 are inserted are formed on each of the right and left sides so that the slider may be retained at two positions. Also, wall-like ribs 88 are forwardly formed in an upright manner for receiving the biasing force of the above-described leaf spring. As shown, cutaway portions 89 are provided in the ribs 88 except for both portions of the central portion and both end portions with which front ends 83a of the leaf spring 83 contacts and slide. This structure serves to release the loosened tape inside of the casing body so as not to protrude outside of the casing body when the cassette is subjected to collision shocks due to the drop of the cassette or the like.

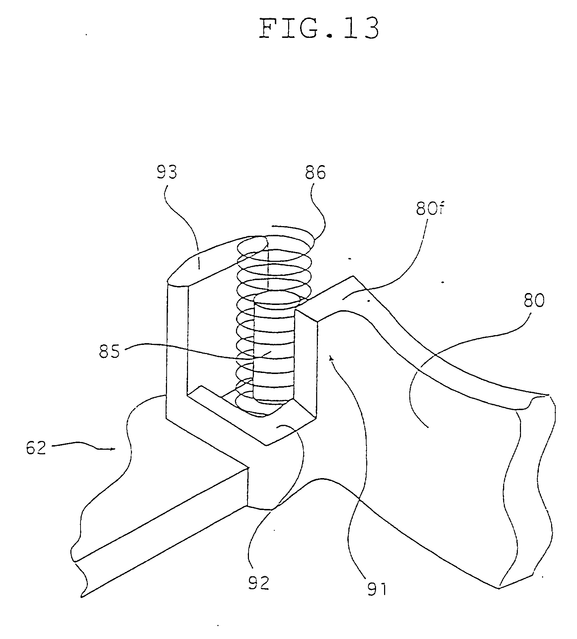

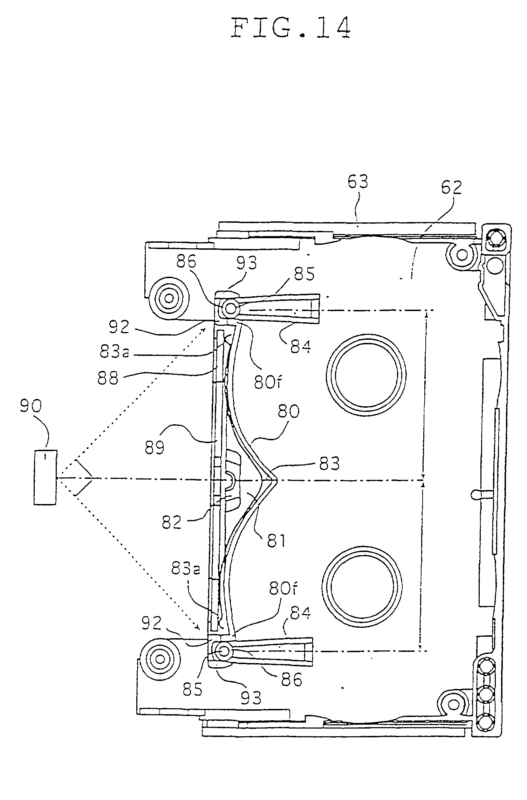

The second embodiment relates to the shape at both the right and left end portions of the wall-like member 80 of the above-described lower half 62. FIG. 13 is an enlarged view showing a portion indicated by reference character E in FIG.12 and FIG. 14 is a plan view showing the lower half 62. The second embodiment will now be described with reference to these drawings.

In FIG. 14, the slider 63 is assembled in the lower half 62 and is retained on the rear side (right side in the figure). For this reason, the leaf spring 83 is largely opened. It is necessary to provide a space for receiving its front end portions 83a. Therefore, in order to allow both ends to be curved inside of the casing body(on the side away from the front end portions 83a of the leaf spring 83) and to enhance the rigidity, each of the end portions of the leaf spring is bent at an acute angle forwardly (left side of the FIGure) and is extending straightly forwardly, and both end portions 80f and 80f form an L-shape.

An optical sensor 90 for detecting the compression coil spring 86 is arranged at a position on a vertical bisector of a line connecting two compression coil springs 86 and 86 so that an angle for these compression coil springs 86 and 86 is at an angle of 90° .

Therefore, in order not to interrupt the optical path connecting the optical sensor 90 and the compression coil springs 86, as shown in FIG. 13, a cutaway portion 92 is provided to each of the straightly extending portions 91 of the wall-like member 80 after the wall-like member 80 has been bent at the acute angle in an L-shape.

Since the cutaway portion 92 is provided, in the case where the compression coil spring 86 is detected by the optical sensor 90, as shown in FIG. 14, if the slider 63 is also located on the rear side, there is no fear that the optical path would be interrupted by the wall-like rib 88. The light emitted from the optical sensor 90 is projected to the compression coil spring 86 and the reflective light is caught by the optical sensor 90. Accordingly, the L-shaped structure of the wall-like member 80 no longer obstructs the detection.

Thus, since both end portions 80f and 80f of the wall-like member 80 are formed into L-shapes (in particular, the angle is acute), and at the same time the cutaway portions 92 are provided, it is possible to ensure the detection of the above-described compression coil springs 84 by the light. Furthermore, it is possible to enhance the rigidity of the above-described wall-like member 80.

Also, the portion 91 of the wall-like member 80 curved in the L-shape and extending straightly forwardly, and the rib 93 provided in parallel to face the boss 85 mainly serve as the tape guide but also serve to protect the compression coil spring 86 from slanting and to enhance the rigidity of the casing. Furthermore, since the portion 91 of the above-described wall-like member 80 extending forwardly is provided, the above-described rib 93 serves as the guide when the compression coil spring 86 is fitted around the boss 85, in cooperation with the portion 91. It is thus possible to readily assemble the compression coil springs 86.

Incidentally, the detection of the compression coil springs 86 may be detected not only by utilizing the position where the slider 63 is retracted rearwardly but also by utilizing the position where the slider 63 is located forwardly if the light is introduced through the cutaway portions 89 of the above-described wall-like ribs 88.

Thus, according to the second embodiment, it is possible to ensure the detection of'the compression coil springs by using the light and also to enhance the rigidity. As a result, it is possible to prevent the occurrence of a defect caused by the insufficient engagement of the slider due to the mismounting of the compression coil springs, for example, in the case where the slider could not be opened or the slider is soon closed even if the slider is once opened.

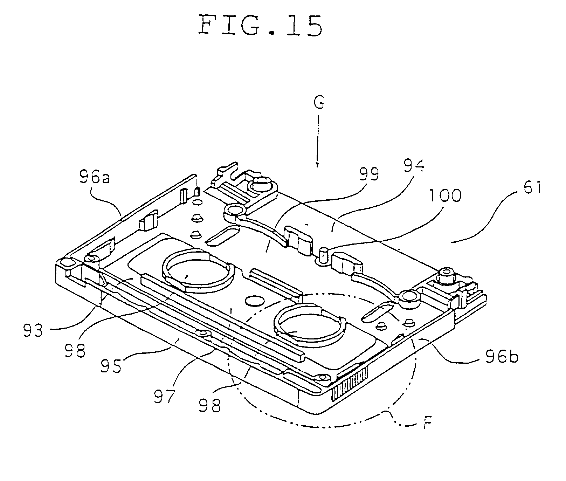

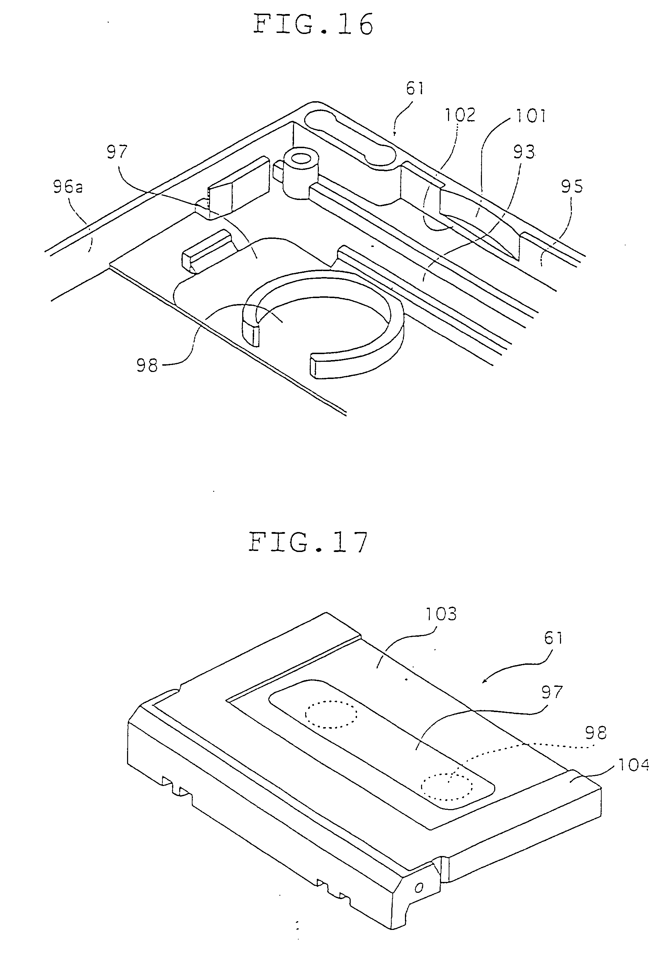

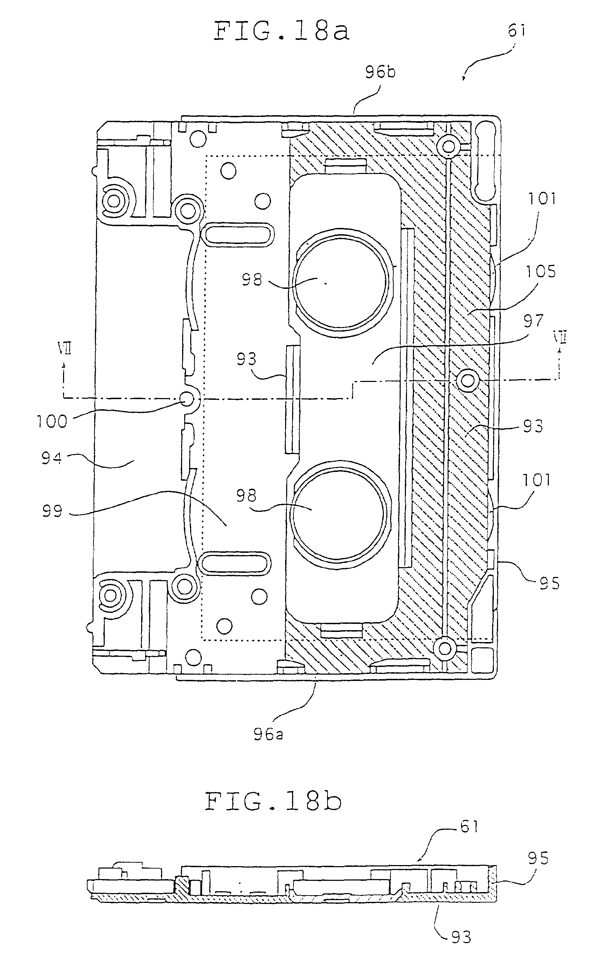

Next, FIGs. 15 to 18 are views showing the details of the upper half 61 of the magnetic tape cassette according to a third embodiment. FIG. 15 is a perspective view showing the inside of the upper half 61 which has been turned over. FIG. 16 is an enlarged perspective view showing the forward lower side (a portion encircled by imaginary line F) of the upper half 61 shown in FIG. 15, as viewed in the opposite direction (in the direction of the forward arrow G of the cassette). FIG. 17 is a perspective view showing an outer appearance of the upper half 61. FIG. 18a is a plan view showing the upper half 61. FIG. 18b is a cross-sectional view taken along the line VII-VII of FIG. 18a.

In these FIGures, in the upper half 61, side walls in tree directions except for the front portion 94 of the upper half body 93 which becomes the upper surface of the cassette case, i.e., a side wall 95 on the rear side and side walls 96a and 96b, is provided vertically relative to the upper half body 93, and a tape visual observation window 97 which is transparent for observing from the outside of the cassette case the take-up condition of the magnetic tape is provided somewhat on the rear side of the central portion. Two bearing portions 98 and 98 are provided in this tape visual observation window 97 for rotatably supporting gears for the take-up hub.

The front portion of this window 97 is a brake member mounting portion 99 for mounting the above-described brake member, and a central coil portion of the brake spring is fitted around a pin 100 to thereby bias the brake member toward a gear of the take-up hub.

As described in conjunction with the lower half, the further forward portion of the brake member mounting portion 99 is a space for introducing the tape loading device provided on the side of the recording/reproducing apparatus when the magnetic tape cassette is inserted into the recording/reproducing apparatus, and becomes a front portion 94 in which a protrusion of the magnetic tape exposed to the outside is provided corresponding to the recording head position of the recording/reproducing apparatus.

A recess 101 is provided on the rear side wall 95 on the rear side of the upper half 61 in order not to interfere with the rear side wall 95 when all the magnetic tape wound around the take-up hub is wound around the take-up hub on one side to become a maximum diameter, and at the same time, the back surface side is recessed as the label area. Accordingly, the rear side wall 95 is locally thinned in a position of this recess portion 101.

As shown in FIG. 7, in the upper half 11 according to the conventional technology, the recess portion 50e reaches the upper half body 50a or the upper half 11. However, in the upper half 61 used in the present embodiment, as shown in FIG. 16, in the side of the upper half bode 93 of the recessed portion 101, the height is limited to the level that it does not interfere with the magnetic tape that has become the maximum diameter and the recessed portion is not formed on the side of the upper half body 93 or the lower portion 102 thereof to thereby limit to a minimum level the portion of the rear side wall 95 that has to be thinned.

Also, the rear side wall 95 except for this recessed portion 101 is enlarged in thickness including the lower portion 102 of the recessed portion 101 and the change in thickness of the rear side wall 95 is limited to the minimum level so that the thickness of the rear side wall 95 is increased as much as possible.

According to the third embodiment, the thickness of the rear side wall 95 is increased as much as possible and the portion whose thickness is likely to be decreased is limited to the minimum level in the range without the interference with the magnetic tape having the maximum diameter, thereby preventing the thermal deformation of the upper half 61.

Also, as shown in FIG. 17, the label attachment surface 103 on which the content recorded on the magnetic tape is described on a label is formed on the upper half 61 in a stepdown manner to the upper surface 104 of the upper half 61.

The thickness of the upper surface 104 of the upper half 61 is about one millimeter. The label attachment surface 103 having a step having a distance of about 0.2 millimeters is formed here. The change rate of the thickness reaches a remarkable extent of 20%. Accordingly, as described above, it is possible to consider that the existence of the label attachment surface 103 is a remarkable factor of the thermal deformation of the upper half 61.

Accordingly, according to the third embodiment , as shown in FIG. 18, in the upper half body 93 forming the upper surface of the upper half 61, the thickness increased portion 105 (indicated by hatching) where the stable molding is possible is provided on a wide area including the label attachment surface 103 on the inner surface of the upper half 61 which becomes a back surface of the label attachment surface 103. The change in thickness due to the label attachment surface 103 is moderated by this thickness increased portion 105, thereby preventing the thermal deformation.

In the foregoing description, the explanation has been given to the upper half in which the deformation amount is remarkable. However, it is of course possible to apply the present invention to the lower half that has basically the same structure as that of the upper half.

As described above in detail about the magnetic tape cassette according to the present invention, it is possible to understand that the present invention is not limited to the specific examples described above and it is of course possible to modify and change the present invention within the range of the spirit of the essence of the present invention.

In a magnetic tape cassette according to a first embodiment when an upper half and a lower half are coupled with each other to form a magnetic tape cassette, the lower abutment portion projected from the lower half and the upper abutment portion projected from the upper half corresponding to the aforesaid abutment portion are brought into contact with each other in the vicinity of and inside of the sliding portions so that the structure that is the same as that of the reinforcement members between the upper half and the lower half, thereby realizing the high rigidity.

Also, in this magnetic tape cassette, the inside and the vicinity of the sliding portions are portions provided with the respective mechanisms that are important to exhibit the functions as the magnetic tape cassette such as the travel portion of the magnetic tape, the opening/closing mechanism for the front lid, the slider engagement locking mechanism and the like. By enhancing the rigidity of this portion, it is possible to stably operate these respective mechanisms. This is useful. In particular, the vicinity of the tape drawing opening through which the magnetic tape travels is the portion that is important in keeping the stable tape travel. This is useful.

Furthermore, according to the first embodiment, since the enhancement of the rigidity of these components may be realized in low cost by using less expensive material without using especially expensive material or part, this is useful.

Also, in the magnetic tape cassette according to the second embodiment, since both end portions of the wall-like member provided in the lower half along the magnetic tape wound around the take-up hub are bent in an L-shape and the tip end portions are cut away so that the compression springs are exposed, it is possible to ensure the detection of the compression springs by the light and to enhance the rigidity of the above-described member.

Also, in the magnetic tape cassette according to the third embodiment of the present invention, the side of the planar upper half body of the recessed portion formed on the rear side wall of the upper half is formed to have the same thickness as that of the side wall of the rear portion of the upper half, that is, the recess portion of the rear side wall is formed at a depth directed on the side of the upper half body from the release end side on the way so that the magnetic tape does not interfere. The recess portion is not formed on the side of the upper half body to thereby suppress the change in thickness. Thus, the remarkable decrease of the thermal deformation may be attained.

In the molding of plastics, a stress is concentrated on a corner portion or a portion where a thickness changes. If this portion is exposed for a long period of time in a high temperature atmosphere, the stress is released, and a deformation occurs in the corner portion or the portion where the thickness changes. It is well known that this mainly causes the generation of deformation as a whole.

Then, in case of the upper half, as described above, each region of the upper half body is thinned because of standardization of the dimension for ensuring the space for the introduction of the tape loading device, keeping the space for receiving the brake member and sliding the brake member, keeping the stable molding, in the integral molding molds, the formation of the label attachment region and the like. Also, the observation window for the magnetic tape wound around the take-up hub is provided, in addition, the region of the observation window is made of different material from that of any other portions of the upper half body, and the thickness is decreased in order to keep the receiving space for the take-up hub. Furthermore, the rear portion side wall of the upper half is very thinned in order to prevent the interference with the magnetic tape wound around the take-up hub. Thus, there are many factors of the deformation. In particular, the label attachment region and the upper half rear portion side walls are the causes for the most serious problems of the deformation. It is confirmed that the upper half as a whole is largely deformed.

In particular, the one in which the recessed portion is formed over the entire surface along the full night of the rear side wall in the conventional technology is formed so that the upper half body side of the recessed portion provided in the rear side wall of the upper half is formed to have the same thickness as that of the rear side wall of the upper half so that the portion which is different in thickness may be suppressed to a minimum level to thereby prevent the thermal deformation.

Also, in the cassette case having the label attachment surface, in order to prevent the deformation due to the presence of the label attachment surface, the thickness increased portion is formed in the wide area including the label attachment surface in the inner surface of the upper half that becomes the back surface of the label attachment surface.

Then, with the above-described structure, it is possible to suppress the deformation of the cassette case to such an extent that there is no problem in practical use even if the cassette case is disposed for a long period of time in a chamber which is kept at a high temperature, like a passenger room of an automotive vehicle in summer.

## Claims

1. A magnetic tape cassette comprising a casing body composed of an upper half (61) and a lower half (62) for receiving a pair of take-up hubs around which a magnetic tape is wound, for apply of a tension through a predetermined path to the magnetic tape between said pair of take-up hubs and for mating with each other so that only the forward magnetic tape is exposed to the outside,
**characterized in that**
said upper half (61) has a planar upper half body and side walls (95, 96a, 96b) suspended from said upper half body in three directions except for the front portion (94) of said cassette case, a thickness of the side wall (95) on the rear portion of said cassette case out of these side walls (95, 96a, 96b) is greater than a thickness of the rest of side walls (96a, 96b) of the side portion of said cassette case, and
a recess portion (101) for preventing an interference with the magnetic tape wound around said take-up hubs is formed in the side wall (95) of said rear portion and a depth of said recess portion (101) towards said upper half body from the release end side of the side wall (95) of this rear portion is smaller than a height of the side wall (95) of said rear portion.

2. The magnetic tape cassette according to claim 1, **characterized in that** a label attachment surface (101) is stepped down for attaching a label in which a content recorded on the magnetic tape is described on an upper surface (104) of said upper half (61), and
a thickness increased portion (105) is formed in a wide area including said label attachment surface in an inner surface of said upper half body which becomes a back surface of said label attachment surface (103).

3. A magnetic tape cassette according to claim 1 or 2, **characterized in that** the upper half (61) and a lower half (62) for receiving a pair of take-up hubs around which a magnetic tape is wound and for forming a cassette case are coupled in a lid mating manner and a slider (63) is attached along a bottom surface and side surfaces of the lower half (62),
wherein said slider (63) is mounted on an outer lower surface of said lower half (62) slidably along the bottom surface of said lower half (62) so that a guide insertion portion on a front side of the casing body and reel shaft insertion holes of the bottom surface of said lower half (62) can be opened and closed, and is biased to a position where said guide insertion portion and said reel shaft insertion portion are closed by a V-shaped leaf spring (83).

4. A magnetic tape cassette according to claim 3, **characterized by** resilient locking pieces (84) formed in the bottom surface of the lower half (62) in a cantilever manner along the bottom surface of said lower half (62) with their free end head portions being inserted into the engagement holes of said slider (63) for retaining said slider (63), and
compression springs (86) provided between the free end head portions of said resilient locking pieces (84) and the inner wall of said upper half (61) for biasing the head portions towards the side of the engagement holes of the slider (63).

5. A magnetic tape cassette according to claim 3 or 4, **characterized by** a wall-like member (80) provided vertically to the bottom surface on the front side of said lower half (62) and in the form of a V-shape along the magnetic tape wound around said take-up hub by connecting two divided sleeve-shaped ribs (93) with its both end portions extending up to the vicinity of the provision position of said compression springs (86),
wherein both end portions (80f) of said wall-like member (80) are bent in an L-shape and at the same time its end portions are cut away so that said compression springs (86) are exposed.

6. A magnetic tape cassette according to at least one of the preceding claims 3 to 5, **characterized in that** said slider (63) is provided with cutaway portions (89) except for both end portions and central portion with which end portion of a leaf spring (83) contacts and slides.

7. A magnetic tape cassette according to at least one of the preceding claims 1 to 6, **characterized in that** said slider (63) has at both side ends engagement sliding portions (77a, 77b) engaged slidingly with sliding grooves formed along a back-and-forth direction of the casing body between right and left side walls (64a, 64b) of the upper half (61) and right and left side walls (68a, 68b) of the lower half (62),
wherein lower abutment portions (69a, 69b, 70a, 70b, 71a, 71b) projected from the lower half (62) and upper abutment portion (65a, 65b, 66a, 66b, 67a, 67b) projected from the upper half (61) corresponding to said lower abutment portions (69a, 69b, 70a, 70b, 71a, 71b) and kept in contact with said lower abutment portions (69a, 69b, 70a, 70b, 71a, 71b) are provided in the vicinity of and inside of said engagement sliding portions (77a, 77b).

8. The magnetic tape cassette according to claim 7, **characterized in that** said lower abutment portions (69a, 69b, 70a, 70b, 71 a, 71b) and said upper abutment portions (65a, 65b, 66a, 66b, 67a, 67b) are provided in the vicinity of tape drawing openings (76a, 76b).

9. The magnetic tape cassette according to claim 7 or 8, **characterized in that** said lower abutment portions (69a, 69b, 70a, 70b, 71a, 71b) and the upper abutment portions (65a, 65b, 66a, 66b, 67a, 67b) are provided on the side of the drawing openings (76a, 76b) of the side wall upper surfaces (78a, 78b) of the lower half (62) along which the lower surfaces of the engagement sliding portions (77a, 77b) of the slider (63) are slid.
